Europäisches Patentamt

European Patent Office

Office européen des brevets

(19)

(11) Publication number: **0 036 421**
**B1**

## EUROPEAN PATENT SPECIFICATION

(45) Date of publication of patent specification: 01.08.84

(51) Int. Cl.³: **H 01 M 10/34, H 01 M 2/02**

(21) Application number: **80901854.2**

(22) Date of filing: **08.10.80**

(86) International application number:
**PCT/GB80/00158**

(87) International publication number:
**WO 81/01078 16.04.81 Gazette 81/9**

(54) ASSEMBLING ELECTRIC BATTERIES.

<table>
<tr><td>

(30) Priority: **08.10.79 GB 7934792**

(43) Date of publication of application:
**30.09.81 Bulletin 81/39**

(45) Publication of the grant of the patent:
**01.08.84 Bulletin 84/31**

(84) Designated Contracting States:
**FR**

(56) References cited:
**WO - A - 80/01970**
**FR - A - 1 019 101**
**FR - A - 2 142 326**
**FR - A - 2 275 894**
**GB - A - 312 828**
**GB - A - 767 883**
**US - A - 1 564 766**
**US - A - 2 707 202**
**US - A - 2 906 805**
**US - A - 3 600 233**

</td><td>

(73) Proprietor: **CHLORIDE GROUP PUBLIC LIMITED COMPANY**
**52 Grosvenor Gardens**
**London SW1W 0AU (GB)**

(72) Inventor: **PEARSON, Ernest James**
**134 Manchester Road**
**SwintOn, Manchester (GB)**

(74) Representative: **Jennings, Nigel Robin et al,**
**KILBURN & STRODE 30 John Street**
**London WC1N 2DD (GB)**

</td></tr>
</table>

Courier Press, Leamington Spa, England.

## Description

The present invention relates to a method of assembling electric batteries and is concerned with such a method which includes forming a plurality of cell packs comprising one or more positive electrodes and one or more negative electrodes interleaved with separator material, inserting each cell pack into a respective bag of flexible plastics film and inserting the cell packs into a preformed battery container whereby in the finished battery the adjacent cells are spaced apart by intercell partitions constituted by the film walls of the said bags.

A method of the general type referred to above is disclosed in British Patent No: 767883 which relates to the assembly of a sea water battery in which the cell packs are introduced into a battery container through an open end thereof and the container is so shaped that after assembly certain of the cell packs are spaced from the adjacent cell packs. British Patent No: 312828 discloses a zinc carbon battery in which the cells are encased within a respective casing of vulcanised rubber and accommodated within a common outer casing.

According to the present invention a method of the type referred to above is characterised in that the battery is of recombinant lead acid type, the container is of substantially rectangular section and is open-topped, the cell packs are slid into the container through its open top, the cell packs are so dimensioned with respect to the container, that they are all a tight fit within the container, at least in the direction transverse to the planes of the intercell partitions, and that the container is subsequently sealed by a lid.

Whilst recombinant batteries are known per se it is not known to enclose the cell packs of such a battery of lead acid type in respective plastics bags which constitute the intercell partitions in the assembled battery. The method of the present invention provides a simple and economic method of assembling lead acid recombinant batteries which inherently result in the appropriate conditions for such a battery to operate in the desired manner.

The provision of the bags of plastics film material permits the cell packs to be a relatively tight fit within the battery container thereby minimising the effects of vibration and in addition enabling the available space to be used more economically. It is not generally possible to slide a cell pack into a cell compartment unless the plate pack is substantially smaller than the compartment due to frictional forces. It has in the past been proposed to overcome this by slightly compressing the leading edge of the plate packs during their introduction into the cell compartments, and it has also been proposed that a plastics shim be placed against each flat face of each cell pack to facilitate its sliding in to its respective compartment. However shrouding the cell packs in bags of plastics film substantially reduces the friction of the cell pack with the battery container very much more simply. The plate straps and intercell connectors may be formed before the cell packs are inserted into the battery container, or afterwards. In the latter case the provision of the bags of plastics film has the additional advantage that they tend to hold the cell packs together before and during insertion into the container since they are a close fit at least against the opposed surfaces of the cell pack.

Batteries of so called "sealed" or "recombinant" type are batteries in which the amount of electrolyte present is restricted so that there is no free unabsorbed electrolyte in the cells, and the gases evolved during operation or charging are induced to recombine within the battery. Such batteries utilise separators of compressible fibrous absorbent material, and it is believed to be important that in such batteries the separators be maintained in intimate contact with the electrodes so that the entire surface of the electrodes has adequate electrolyte for its electrochemical requirements. Thus, in such batteries it is necessary either that the cell packs are under a compressive stress or that they are at least a relatively tight fit within the container to ensure the necessary close contact between the electrodes and separators. The provision of the plastics bags around the cell packs facilitates the introduction of the cell packs into the container at the requisite degree of tightness and since the film is flexible the pressure exerted by the container is transmitted to the cell packs.

The flexible plastics bags constitute the intercell partitions in the assembled battery. This enables a much simpler battery container to be used than previously in lead acid batteries, by virtue of the fact that no integral intercell partitions need to be moulded, and permits the achievement of a higher capacity from a battery of the same external dimensions by virtue of the fact that virtually no space is occupied by the intercell partitions.

In addition the fact that the bags are flexible and the cell packs are a tight fit within the containers ensures that the plates and the separators are held in the necessary intimate contact by the pressure exerted by the container.

As mentioned above the cells contain essentially no free unabsorbed electrolyte, and in the most preferred condition of the cells the amount of electrolyte is not sufficient to saturate the pores in the electrodes and in the separators. The electrolyte absorption ratio of the separator material is preferably greater than 100%.

Electrolyte absorption ratio is the ratio, as a percentage, of the volume of electrolyte absorbed by the wetted portion of the separator material to the dry volume of that portion of the separator material which is wetted, when a strip of the dry separator material is suspended vertically above a body of aqueous sulphuric acid

electrolyte of 1.270 SG containing 0.01% weight sodium lauryl sulphonate with 1 cm of the lower end of the strip immersed in the electrolyte, after a steady state wicking condition has been reached at 20°C at a relative humidity of less than 50%.

The thickness measurement at least for the electrolyte absorption ratio measurement is carried out with a micrometer at a loading of 10 kilopascals (1.45 psi) and a foot area of 200 square millimetres (in accordance with the method of British Standard Specification No. 3983). Thus the dry volume of the test sample is measured by multiplying the width and length of the sample by its thickness measured as described.

We also prefer that the separator material should have a wicking height of at least 5 cms on the above test, namely that the electrolyte should have risen to a height of at least 5 cms above the surface of the electrolyte into which the strip of separator material dips when the steady state condition has been reached.

We find that these two requirements are met by fibrous blotting paper like materials made from fibres having diameters in the range 0.01 micrometres, or less, up to 10 micrometres, the average of the diameters of the fibres being less than 10 micrometres and preferably less than 5 micrometres, the weight to fibre density ratio, namely the ratio of the weight of the fibrous material in grams/square metre to the density in grams/cubic centimetre of the material from which the individual fibres are made preferably being at least 20 preferably 30 and especially 50.

Moreover, this combination of properties gives a material which is highly resistant to "treeing through", namely growth of lead dendrites from the positive electrode of a lead acid battery to the negative electrode producing short circuits, whilst at the same time, even when containing large amounts of absorbent electrolyte, still providing a substantial degree of gas transmission capability.

This combination of properties is ideally suited to use in so-called "sealed" or "recombinant" lead acid batteries in accordance with the invention in which the amount of electrolyte present is restricted so that there is no free unabsorbed electrolyte in the cell. The amount of electrolyte added is typically in the range 7 to 12 mls of sulphuric acid of 1.270 SG per cell in the discharged state of the cell, per Amphere hour of capacity of the cell.

Recombinant lead acid batteries operate under superatmospheric pressure e.g. from 1.1 bars upwards and due to the restricted amount of electrolyte, the high electrolyte absorption ratio of the separator, and there being at least as much negative active material capacity as positive active material capacity and the higher electrochemical efficiency of the negative electrode, the cell operates under the so-called "oxygen cycle" in which oxygen during charging or overcharging at the positive is transported, it is believed, through the gas phase in the separator to the surface of the negative which is damp with sulphuric acid and there recombines with the lead to form lead oxide and which is converted to lead sulphate by the sulphuric acid. Loss of water is thus avoided as is excess gas pressure inside the cell. If the charging conditions generate oxygen at a faster rate than it can be transported to the negative and react thereat, then the excess oxygen is vented from the cell.

The cells may be located in the container in the dry state a lid sealed on, and the electrolyte injected into the cells e.g. through filling holes provided in the lid above each cell.

The amount of electrolyte added is not highly critical since it is observed that if a slight excess of electrolyte is added above that required to saturate the porosity of the cell components the recombination mechanism is suppressed and electrolyte is lost by electrolysis until the electrolyte volume has reached the correct amount for the cell in question, i.e. the cell porosity has reached the correct degree of unsaturation, when the recombination mechanism comes into operation again and a steady state recombination condition related to the rate of charging which is used is established.

The electrodes may be prismatic or may be spirally wound. Prismatic electrodes may be separate or rectilinear plates e.g. cast grids, or cast or rolled sheets, slit and expanded to make expanded grids or cast or rolled sheets punched to produce perforated grids. The prismatic electrodes may be folded and interleaved or arranged in interleaved zig zag relationship, the longitudinal axes of the plates being parallel to each other or at right angles to each other.

Spirally wound electrodes are preferably made from expanded mesh grids or perforated grids and these are preferably provided with unexpanded selvedges from which the current take offs are made or to which they are connected.

Conventional grid alloys may be used to make the current conducting supports for the electrodes but for the folded or wound embodiments, softer materials such as pure lead or lead/calcium alloys e.g. with up to 0.1% calcium or lead/calcium/tin alloys e.g. with up to 0.1% calcium and up to 1.0% tin are preferred.

The gas venting means preferably take the form of a non-return valve so that air cannot obtain access to the interior of the battery although gas generated therein can escape to atmosphere.

The plastics film must resist degradation by the electrolyte. Thus it may be polyethylene or polypropylene or polyvinyl chloride film for a lead acid battery, and may have a thickness of less than 0.010 inches (0.25 mms) e.g. 0.001 to 0.005 inches (0.025—0.125 mms).

The invention may be put into practice in various ways and one specific embodiment will be described by way of example to illustrate the invention with reference to the accompanying diagrammatic drawings in which:

Figure 1 is a perspective view of a single cell pack of a recombinant multicell lead acid battery having flat plates for use in the method in accordance with the present invention;

Figure 2 is a perspective view of an assembled recombinant battery with one corner cut away;

Figure 3 is a view similar to Figure 2 showing part of the battery lid and the single vent;

Figure 4 is an electron scanning photomicrograph of a preferred separator material at 1000 fold magnification; and

Figure 5 is a view similar to Figure 3 at 4000 fold magnification.

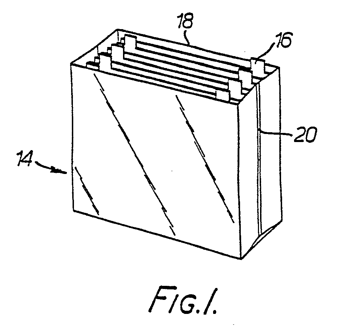

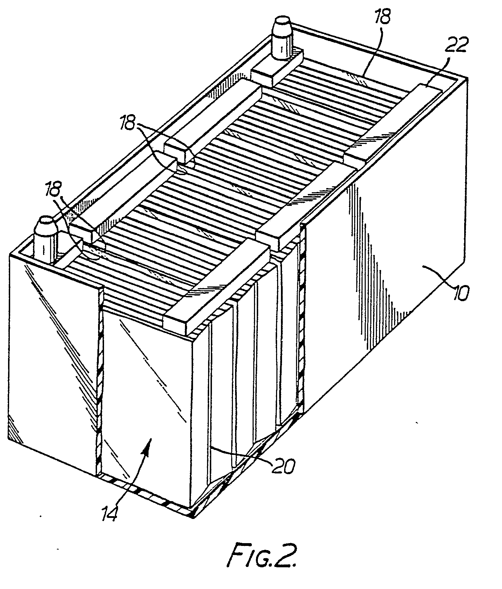

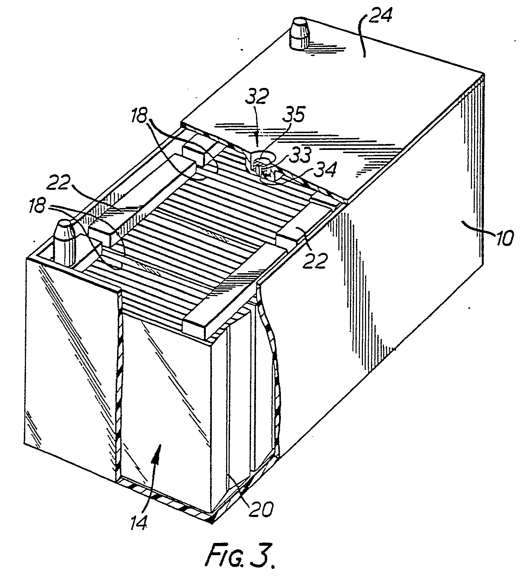

Referring to Figure 1, six cell packs 14 having the construction illustrated are first assembled. Each cell pack is made up by assembling a stack of positive and negative plates, each of which has a plate lug 16, interleaved with compressible absorbent microfine glass material which will be described in more detail below. Each stack is then inserted into a respective bag 18 of plastics film, which has a wall thickness of less than 0.010 inches (0.25 mms), of for instance polypropylene, which is seamed at 20. The plastics bag extends up above the plates, and separators, but not as far as the tops of the plate lugs 16. The six cell packs are then slid into an open-topped rectangular container 10 through its open top and the cell packs are so dimensional with respect to the container that they are all a tight fit within the container in a direction transverse to the planes of the plates. The relatively low co-efficient of friction between the bags and the container enables the cell packs to be inserted with relative ease, the flexibility of the bags ensuring intimate contact between the plates and the separators. The negative and positive plates within each cell pack are connected together by respective plate straps which are fused to the plate lugs 16 in any conventional manner. Every alternative plate strap passes over an intercell partition 12 constituted by the walls of two adjacent bags to form an intercell connector in the usual manner. The battery then has the form illustrated in Figure 2. A reduced amount of electrolyte is added to each cell, either prior to sealing, e.g. hot plate welding a lid to the container or after such sealing, e.g. by injecting through holes in the lid. The battery then has the form shown in Figure 3.

As may be seen in Figures 2 and 3, the container has no intercell partitions and the bags 18 of plastics film, which have a wall thickness of less than 0.010 inches (0.25 mms), serve the function of the partitions. As mentioned above the plastics bags extend above the tops of the separators and plates and this is important since it ensures that the separator material in adjacent cells cannot come into contact. It is not critical if the bags should extend slightly above the plate lugs, since the flexible plastics material will simply be depressed by the mould in which the plate straps are formed, or by the plate straps themselves.

The fact that the intercell partitions constituted by the bags are not sealed to the lid means that any gas evolved within the battery can pass from cell to cell. This permits the provision in the battery made by the method of the present invention of only a single vent which communicates with a common head space below the battery lid and thus vents all the cells. Such as construction is illustrated in Figure 3 in which the battery lid 24 is provided with a single vent 32. This vent is of Bunsen type and comprises an aperture 34 in the floor of a well in the lid, the aperture being surrounded by an upstanding open-topped tube 33. The tube is covered by a rubber cap 35 which lifts away from the wall of the tube when the pressure rises within the battery thus venting excess gas to the atmosphere.

In a specific embodiment the plate supports are cast prismatic grids made from a lead, 0.07% calcium, 0.7% tin alloy. The grids are 1.2 mms thick and are rigid and self supporting and resist deformation even under load. They have good creep resistance.

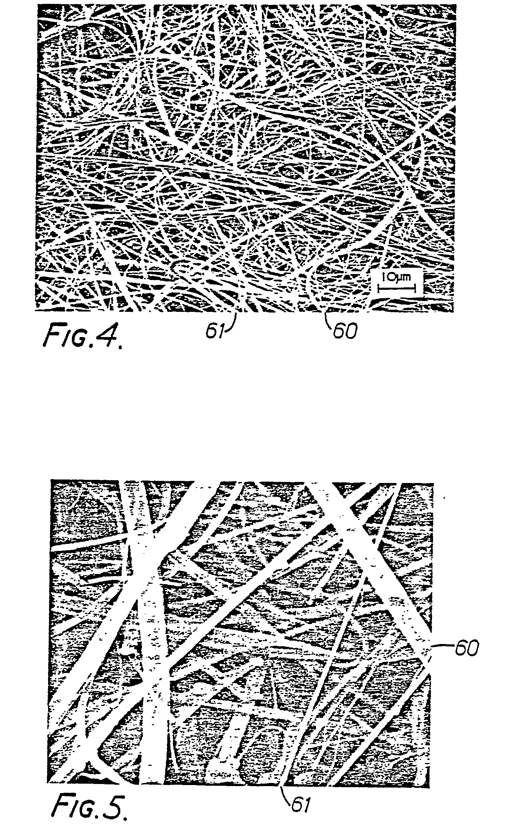

The separators are highly absorbent blotting paper-like short staple fibre glass matting about 1 mm thick, there being fibres 61 as thin as 0.2 micrometres and fibres 60 as thick as 2 micrometres in diameter, the average of the diameters of the fibres being about 0.5 micrometres. Figures 4 and 5 show this material at different magnifications, Figure 4 at 1000 fold and Figure 5 at 4000 fold.

It will be observed that the material whilst highly absorbent still has a very large amount of open space between the individual fibres. The material when tested for its wicking and electrolyte absorption capabilities as described above absorbs electrolyte so that the liquid has wicked up to a height of 20 cms after 2 hours and this is the steady state condition. This 20 cms of material absorbs 113% of its own dry volume of electrolyte, and this is its electrolyte absorption ratio.

The separator material weights 200 grams/square metre and has a porosity of 90—95% as measured by mercury intrusion penetrometry. The density of the glass from which the fibres of the separator are made is 2.69 g/cc; the weight to fibre density ratio is thus 74.

The battery shown in Figures 2 and 3 may be assembled by stacking the interleaved pasted plates and separators within their bags in a jig, and then inserting the complete assembly into the container, or the cell packs may be inserted sequentially into the container. The electrolyte is added to the cells and the plate straps/intercell connectors are formed after the cell packs have been inserted into the container. The battery terminals are then connected to or formed on the plate straps and the lid sealed to the container.

After electrolytic forming the cell may then be brought to a gas recombination steady state (if it is not already in that state) by appropriate charging to electrolyse off any excess electrolyte.

## Claims

1. A method of assembling an electric battery including forming a plurality of cell packs comprising one or more positive electrodes and one or more negative electrodes interleaved with separator material, inserting each cell pack into a respective bag of flexible plastics film and inserting the cell packs into a preformed battery container whereby in the finished battery the adjacent cells are spaced apart by intercell partitions constituted by the film walls of the said bags, characterised in that the battery is of recombinant lead acid type, the container is of substantially rectangular section and is open-topped, the cell packs are slid into the container through its open top, the cell packs are so dimensioned with respect to the container that they are all a tight fit within the container, at least in the direction transverse to the planes of the intercell partitions, and that the container is subsequently sealed by a lid.

2. A method as claimed in Claim 1 in which the wall thickness of the bags of plastics film material is less than 0.010 inches (0.25 mms).

3. A method as claimed in Claim 1 or Claim 2 in which the separator material comprises glass fibres having an average diameter of less than 10 micrometres.

4. A method as claimed in Claim 1, 2 or 3 in which the battery includes a single vent which communicates with a common head space below the battery lid and thus vents all the cells.

## Patentansprüche

1. Verfahren zur Montage von elektrischen Akkumulatoren, die durch eine Vielzahl von Zell-Paketen gebildet werden, die eine oder mehrere positive Elektroden und eine oder mehrere negative Elektroden mit dazwischen geschichtetem Separator-Material enthalten, bei dem jedes Zell-Paket in eine entsprechende Tasche aus flexibler Plastikfolie eingelegt wird und jedes Zell-Paket in einen vorgeformten Akkumulator-Behälter eingelegt wird, wobei in dem fertigen Akkumulator die benachbarten Zellen durch eine Zwischenzell-Trennwand getrennt werden, die durch die Folienwände dieser Taschen gebildet werden, dadurch gekennzeichnet, daß die Batterie ein wiederaufladbarer Blei-akkumulator ist, daß der Behälter im wesentlichen rechteckig ist, daß er oben offen ist, daß die Zell-Pakete durch die oben vorhandene Öffnung in den Behälter geschoben werden, daß die Zell-Pakete im Verhältnis zu dem Behälter so dimensioniert sind, daß sie zumindest in der Querrichtung zur Ebene der Zwischenzell-Trennwände einen engen Sitz haben, und daß der Behälter nachträglich durch einen Deckel abgedichtet wird.

2. Verfahren gemäß Anspruch 1, dadurch gekennzeichnet, daß die Wandstärke der Taschen aus Plastikfolie kleiner als 0,25 mm ist.

3. Verfahren gemäß Anspruch 1 oder 2, dadurch gekennzeichnet, daß das Separator-Material Glasfasern enthält, die einen mittleren Durchmesser von weniger als 10 Mikrometer aufweisen.

4. Verfahren gemäß Anspruch 1, 2 oder 3, dadurch gekennzeichnet, daß der Akkumulator ein einzelnes Entlüftungs-ventil aufweist, das mit einem gemeinsamen Freiraum unterhalb des Akkumulatordeckels in Verbindung steht und das alle Zellen belüftet.

## Revendications

1. Procédé de montage des batteries électriques qui consiste à former plusieurs groupes de cellules comprenant une ou plusieurs électrodes positives et une ou plusieurs électrodes négatives imbriquées avec une matière séparatrice, à insérer chaque groupe de cellules dans une enveloppe respective formée d'un film de matière plastique flexible et à insérer les groupes de cellules dans un récipient préformé de batterie de façon que, dans la batterie finale, les cellules adjacentes soient espacées l'une de l'autre par des cloisons de séparation intercellules constituées par les parois en film desdites enveloppes, caractérisé en ce que la batterie est du type acide-plomb à recombinaison, le récipient a une section sensiblement rectangulaire et ouvert à sa partie supérieure, les groupes de cellules sont engagés par glissement dans le récipient au travers de sa partie supérieure ouverte, les groupes de cellules sont dimensionnés par rapport au récipient de manière à être tous maintenus étroitement à l'intérieur du récipient, au moins dans la direction transversale aux planes des cloisons séparatrices intercellules et en ce que le récipient est ensuite fermé hermétiquement par un couvercle.

2. Procédé comme revendiqué dans la revendication 1, dans lequel l'épaisseur de paroi des enveloppes en film de matière plastique est inférieure à 0,010 pouce (0,25 mm).

3. Procédé comme revendiqué dans la revendication 1 ou la revendication 2, dans lequel la matière de séparateur comprend des fibres de verre ayant un diamètre moyen inférieur à 10 microns.

4. Procédé comme revendiqué dans la revendication 1, 2 ou 3, dans lequel la batterie comprend un seul évent qui communique avec un espacement commun en dessous du couvercle de batterie et qui assure ainsi l'évent de toutes les cellules.

*FIG.I.*

*FIG.2.*

FIG. 3.

FIG.4.

FIG.5.